# EUROPEAN PATENT SPECIFICATION

(11) **EP 1 011 287 B1**
(45) Date of publication and mention of the grant of the patent: **12.12.2007**
(21) Application number: 99308394.8
(22) Date of filing: 25.10.1999
(51) Int. Cl.: H04Q 7/38, H04L 1/00

(54) **Method for making a call in a multiple bit-rate channel, corresponding bit-rate switching procedure and transmission network**
Verfahren zum Verbindungsaufbau in einem Übertragungskanal mit mehreren Bit-Raten, entsprechende Bit-Ratenschaltungsprozedur und Übertragungsnetz
Procédé d'établissement d'une communication dans un canal de transmission multi-débit, procédure de basculement de débit et reseau de transmission correspondants

(30) Priority: 15.12.1998 EP 98460058
(43) Date of publication of application: 21.06.2000
(73) Proprietor: Lucent Technologies Inc., Murray Hill, New Jersey 07974-0636 (US)
(72) Inventor: Boissel, Guy, 22560 Pleumeur-Bodou (FR); Connan, Christophe, 22970 Ploumagoar (FR); Pasche, Marie-Joelle, 22220 Minihy Treguier (FR); Savona, Jacques, 22300 Lannion (FR)
(74) Representative: Williams, David John

(56) References cited:
- EP-A- 0 647 043
- WO-A-95/35002

## Description

The field of the invention is that of methods for the transmission of telephone calls in multiple bit-rate transmission channels.

The invention can be applied especially to the case of multiple bit-rate links set up between a central station and the remote peripheral stations of a network in a star or hub-and-spoke configuration.

A network of this kind corresponds for example to « rural » telephony infrastructures, typical in regions that are under-equipped in wire or cabled networks and/or have a low density of potential subscribers.

It can be applied especially when a terminal involved in a communication using a network of this kind may require resources with different bit-rates depending on whether it is seeking, for example, to set up either a simple voice call or a transfer of data of the type requiring action by a modem (for example for a connection on an « internet » type open network. In this case, indeed, a voice call will require a lower transmission bit rate than a data transfer.

European patent application EP-A-0647043 and International (P.C.T.) patent publication WO95/35002 are referred to as technological background.

A first known approach consists in routinely providing a bit rate that is capable of coping with the highest resource requirement. However, this approach means under-utilization of the transmission channel since, in the case of simple voice calls for example, the allocated transmission bit rate will be far greater than needed.

A second approach consists of the use of a multiple bit-rate channel to transmit this type of call. However, those skilled in the art are dissuaded from using this technique because of the complexity of the procedures for allocating existing bit rates, which are not compatible with the constraints of communications involving modems, especially in the vital initial stages of setting up calls and of inter-modem negotiation.

Indeed, a change in the bit rate of the line allocated as a function of need implies the implementation of bit-rate switching procedures, to increase or reduce the bit rate allocated to the demand. However, a classic switching of the transmission channel entails the risk that the bit-rate switching is not exactly simultaneous and synchronized in both directions of transmission. The disturbance resulting therefrom is indeed likely to abort the procedure for setting up communications between the modems, and this risk cannot be tolerated in the context of a switching service which is expected to show reasonable reliability and efficiency with a success rate close to 100% when the communications are set up.

The call procedure between two modems, one of them being with a multiple bit-rate telephone subscriber (calling or called subscriber), can be subdivided into four phases:
- making the 32 kbit/s call;
- connecting the two modems;
- procedure for negotiating the speed of transmission between the two modems;
- transfer of the data elements.

In accordance with recommendation V25, the modem connection phase can be subdivided as follows:
- the calling modem, after getting linked up and dialling the number, sends an uninterrupted call tone to the called modem;
- the called modem takes the call, gets connected to the line and, after a silence, sends the response tone constituted by a continuous signal at 2100 Hz;
- as the case may be, the modems can deactivate network echo cancellers and/or suppressors devices, by making or not making phase reversals at regular intervals (typically every 450 ± 25 ms), as specified in the G164 and G165 recommendations.
- the calling modem, after recognizing the answering tone, waits for reception of a silence of 75 ± 25 ms coming from the called modem, and then goes into the negotiation phase. To accelerate the procedure, this calling modem can inform the called modem that it has recognized its reponse by sending it a response tone of the calling modem: in recognizing this signal, the called modem stops sending the response tone and then, after 75 + 20 ms of silence, goes into the negotiation phase.

In the absence of response signal of the calling modem, the called modem sends the response tone for 3,3s ± 0,7s, then after 75 ± 20ms of silence goes into the negociation phase.

To enable the modems to work with an optimum bit rate, the switching of the bit rate (namely the changing of the transmission channel) must be ended before the beginning of the procedure of negotiation between the modems.

This means that the following conditions should be met, in assuming the most unfavorable case, namely the setting up of a call with a minimum-duration response signal of the called modem:
- i - the response of the called modem should not be interrupted for a duration of more than 55 ms, otherwise the calling modem could go into the negotiation phase;
- ii - no action (such as a bit-rate switching operation) on the response half-channel of the called modem should take place after the lapse a certain period of time starting from the response tone on the line, beyond which the phase of negotiation is automatically started (655 ms in the case of an operation of neutralization of the echo suppressors only, 1 255 ms in the case of a neutralization of the echo cancellors and suppressors);
- iii - any action must also take place after approximately 950 ms, i.e. for the duration of at least two phase reversals, should the modems seek to neutralize both the echo cancellors and the suppressors.

The invention forms part, especially, of this context of constraints that could be contradictory.

The present invention is defined in claim 1 to which the reader is now referred. Preferred features are laid out in the dependent claims.

Thus, it is a first goal of the invention to put forward the novel problem of the default allocation, at each request for setting up a call, of a minimum transmission bit rate, although this bit rate is paradoxically insufficient for certain types of communication available to the subscriber.

A complementary goal is to provide a call setting-up procedure that makes it possible to optimize resource allocation by the authorizing, at request, of the allocation of a bit rate higher than the bit rate allocated by default.

Another goal of the invention is to provide a bit-rate allocation procedure of this kind that is compatible with the severe constraints dictated by the procedures for setting up calls between two modems.

It is also a goal of the invention to provide a bit-rate allocation procedure that does not require the addition of a piece of information or the processing of a piece of information supplementary to the items of information presently available in standard call-making procedures and that is activated in particular without any advance knowledge of the nature of the transmission requested by the user or any advance knowledge of the transmission bit rate required by his call.

It is a goal of the invention therefore to provide a solution that meets at least the case where the modems seek to neutralize both the echo cancellers and the echo suppressors during the connection phase when the bit-range switching according to the invention comes into play.

These different goals as well as others that shall appear hereinafter are achieved according to the invention by means of a call setting-up method with bit-rate allocation in a multiple bit-rate transmission channel enabling the routing of a call between a central module and a remote module, of the type comprising at least one first transmission channel at a primary bit rate and at least one second transmission channel at a secondary bit rate,
in which said first and second transmission channels are two-way channels, namely channels constituted by a first transmission half-channel in a first direction of communication and a second transmission half-channel in a second direction of communication,
the method being characterized in that said call setting-up procedure comprises the following successive phases:
- a phase for setting up a call, by default, on a primary bit-rate transmission channel,
- a phase of listening and searching for a signal indicating a secondary bit-rate requirement and, assuming the detection of a signal indicating a secondary bit-rate requirement,
- a phase of bit-rate switching from said first primary bit-rate transmission channel to a second secondary bit-rate transmission channel, said switching being done at different points in time for said first transmission half-channel and for said second transmission half-channel.

In other words, the general principle of the invention thus relies on the passage of an ongoing call from a transmission of data on a first channel at a bit rate with a first value (called a primary bit rate) to a transmission of data on a second channel at a bit rate with a second value (called a secondary bit rate). To obtain this passage, certain conditions have to be fulfilled to bring about the sending, for example by the remote module, of a signal enabling the identification of a secondary bit-rate requirement. It is the detection, for example by the central module, of this signal indicating a secondary bit-rate requirement that prompts the activation of the bit-rate switching phase.

Hereinafter, in the present description of the patent, the term « half-channel » is understood to mean a one-way channel, namely a channel on which the central module receives or sends data from or to a remote module at a given bit rate.

It will be noted that the switching phase takes account especially of the capacities offered by the transmission network. Consequently, the switching phase may be adapted to a large number of configurations of the transmission network. An adaptability of this kind therefore provides great flexibility with respect to the implementation of the method of the invention.

In a preferred mode of operation of the invention in which the central module and the remote module work together with at least one communications modem, said signal indicating a secondary bit rate requirement is sent by one of said modems.

Advantageously, said procedure comprises a complementary phase for the connection of said modems, during which:
- the calling modem sends a call tone to the called modem, then;
- the called modem sends a response tone to the calling modem during a predetermined and uninterrupted period of time, at the end of which there is a phase of negotiation between said modems, said switching phase comprising the following steps:

- a step of activation of a first time lag starting from said detection of a signal indicating a secondary bit-rate requirement,
- a first step for the switching of the call, for the half-channel corresponding to the direction of reception by the remote module, from the primary bit-rate transmission half-channel to the secondary bit-rate transmission half-channel,
- and, at the end of the first time lag, a second step for the switching of the call, for the half-channel corresponding to the direction of sending by the remote module, from the primary bit-rate transmission half-channel to the secondary bit-rate transmission half-channel, said first time lag having a duration smaller than said predetermined and uninterrupted time period, at the end of which there is a phase of negotiation between said modems.

In other words, the observation of the first time lag activated to pass (from a primary bit-rate data transmission channel) to a secondary bit-rate data transmission channel does not disturb the normal operation of the data exchanges between the models when communication is in progress.

Preferably, with said procedure providing for a step of implementation of a function requiring a predetermined implementation time, said first time lag has a duration greater than said predetermined implementation time.

A duration such as this of the first lime lag enables the step to implement a function to be carried out without interrupting it while it is being carried out.

Advantageously, said step for the implementing of a function requiring a predetermined implementation time is a step for the deactivation of network echo suppressors and/or cancellers.

In other words, the duration of the first time lag makes it possible especially to carry out two phase changes to neutralize network echo cancellers.

According to a preferred mode of operation of the invention, in which said first and second steps for the switching of said half-channels imply elementary switching operations between call connection and routing modules, said elementary switching operations imply call interruptions with a duration below a predetermined threshold.

Thus, the modems are prevented from interpreting a disturbance such as this as a signal of passage to the negotiation phase.

Preferably, said first and second switching steps include operations for the Y connections of a secondary bit-rate transmission half-channel in parallel with a primary bit-rate transmission half-channel, prior to a full substitution of said secondary bit-rate transmission half-channel for said primary bit-rate transmission half-channel.

Connection operations of this kind especially prevent any loss of data transmitted during the call.

It will be understood that, for needs of synchronization between the central module and the remote module, connection operations of this kind will take place, in a first stage, in the direction of reception by the remote module and then, in a second stage, in the direction of sending by the remote module.

Advantageously, said procedure furthermore comprises a step for the incrementation of a counter of failures of said procedure in at least one of the situations belonging to the group comprising:
- the occupation of all of said transmission channels at a secondary bit rate;
- the reception by said central module of a message reporting that it was not possible for said first switching step to be carried out by said remote module.

In one particular mode of operation of the invention, said modems work according to the V25 recommendation.

According to a particular mode of operation of the invention, said signal indicating a secondary bit rate requirement is constituted by a 2100 Hz tone.

Preferably, said procedure meets at least one of the following approximate temporal values:
- said predetermined, uninterrupted time period ranges from 400 to 1255 ms;
- said first time lag is in the range of about 800 ms approximately;
- said function requires a predetermined implementation time necessitating a time of about 950 ms:

- said interruptions of calls with a duration below a predetermined threshold are in the range of about 55 ms at most.

Advantageously, said secondary bit rate is higher than said primary bit rate.

Clearly, it is when the primary bit rate allocated by default is a low bit rate, increased only in the event of the detection of a higher secondary bit-rate requirement, that the invention finds a preferred application, providing for an optimizing of the allocation of the bit-rate resources available.

In one particular mode of operation of the invention, said secondary bit rate is equal to 64 kbit/s and said primary bit rate is 32 kbit/s.

According to a particular mode of operation of the invention, the link between said central module and said remote module is an RF link of the type with connection of telephone subscribers by radio concentration.

Preferably, said central module is constituted a central communications station managing the retransmission of the calls, and said remote module is a terminal station.

Advantageously, said call is transmitted according to PCM encoding techniques.

The invention also relates to a switching method of the type implemented especially in the call setting-up procedure as described here above.

The invention also relates to a transmission network implementing the call setting-up procedure as described further above.

Other features and advantages of the invention shall appear from the following description of a preferred mode of operation of the invention, given by way of a non-restrictive example and from the appended drawings, of which:
- Figure 1 is a simplified flow chart of a particular mode of operation of a procedure, according to the invention, for making a call between a central module and a remote module;
- Figure 2 illustrates a simplified diagram of a particular embodiment of a transmission network in which it is possible to implement the procedure of figure 1;
- Figure 3 is a simplified timing diagram used to explain a particular mode of achieving the procedure of figure 1 and implemented within the transmission network of figure 2; and
- Figures 4a, 4b, 4c, 4d, 4e each illustrate a simplified drawing of a particular mode of elementary operations of switching between call connection and routing modules of the transmission network of figure 3.

The present invention therefore relates to a method for setting up a call, within a data transmission network, in a multiple bit-rate transmission channel, between a central module and a remote module, enabling the increase, in the network, of the number of calls for a fixed total data bit rate.

Hereinafter in the description, we shall consider the case of a telephone transmission network in which the modules, especially the central and remote modules, each co-operate with an electronic modulation/demodulation module also known as a modem. In the mode of operation presented, the call setting-up procedure consists in obtaining a switching of the transmission from an economical channel with reduced bit rate to a channel with higher transmission bit rate as soon as the system has detected the presence of a modem in the call that is being set up.

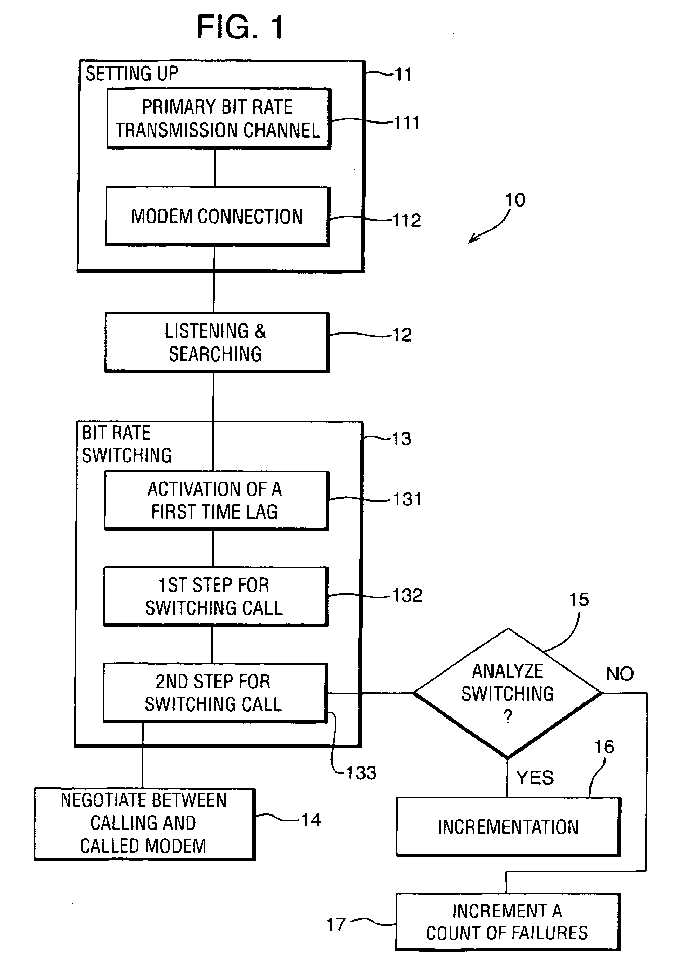

This switching forms part of a call setting-up procedure as shown schematically in figure 1 and described hereinafter.

In a standard way, the procedure for setting up a call with allocation of a transmission channel having a given bit rate in a multiple bit-rate transmission channel enables the routing of a call between a central module and a remote module within a transmission network. To do this, the multiple bit-rate transmission channel comprises at least one first data transmission channel working at a primary bit rate and at least one second data transmission channel working at a secondary bit rate. Each of the first and second data transmission channels comprises both directions of communication. Thus, a first half-channel operates for example in sending data from a central module to a remote module, and a second half-channel operates, for example, in sending data from a remote module to the central module.

It may be recalled that an allocation of a transmission channel is associated routinely with an allocation of a half-channel in the direction of sending by the remote module followed by an allocation of a half-channel in the direction of reception by the remote module.

According to the invention, the call setting-up procedure 10 comprises:
- a phase 11 for the setting up, by default, of a call on a primary bit-rate transmission channel. The transmission of the data elements can be undertaken 111 on the first primary bit-rate transmission channel following, for example:
   - the detection of a ringing sent by the central module and then a connection of the remote module to the line corresponding to the first primary bit-rate transmission channel;
   - or the detection of a call being taken and a number being dialled by a subscriber provided with a distant module, then a connection of the central module to the line corresponding to the first primary bit-rate transmission channel;
- a phase 12 of listening and searching for a signal indicating a secondary bit-rate requirement. This phase 12 is for example a cyclical scanning of the data elements on a predetermined transmission channel on which the central module awaits a signal having predetermined specific characteristics; and, assuming the detection of a signal indicating a secondary bit-rate requirement,
- a phase 13 of bit-rate switching from said first primary bit-rate transmission channel to a second secondary bit transmission channel, the switching being achieved at instants different for the first transmission half-channel and the second transmission half-channel. A switching of this kind can occur, especially, in a first stage on the first half-channel corresponding to the direction of reception of the distant module (working at the secondary bit rate) and then, in a second stage, on the second half-channel corresponding to the direction of reception of the central module (working at the secondary bit rate).

A procedure of this kind has the advantage of optimizing the links within the transmission network, while at the same time optimizing the use of the available resources, namely the multiple bit-rate transmission channels.

In the mode of operation presented, the signal indicating a secondary bit-rate requirement is sent by one of the modems, in this case the modem working together with the distant module.

Consequently, the procedure 10 comprises a modem-connection phase 112 during which the calling modem sends a 1200 Hz call tone (recommendation V25) to which the called modem responds with a 2100 Hz tone that is the signal indicating a secondary bit-rate requirement activating the switching procedure according to the invention, at the end of which there is a phase 14 of negotiation between the calling modem and the called modem.

The switching phase 13 proper comprises the following steps:
- a step 131 for the activation of a first time lag starting with the detection of the signal indicating a secondary bit-rate requirement, for example by the calling modem:
- a first step 132 for the switching of the call, for the half-channel corresponding to the direction of reception by the distant module, from the primary bit-rate transmission half-channel to the secondary bit-rate transmission half-channel;
- and, at the end of the first time delay, a second step 133 for the switching of the call, for the half-channel corresponding to the sending direction by the distant module, from the primary bit-rate transmission half-channel to the secondary bit-rate transmission half-channel, the first time lag having a duration smaller than the predetermined, uninterrupted time period, at the end of which there is the phase 14 of negotiation between the calling modem and the called modem.

The first and second switching phases 132, 133 include operations for the Y connection of a secondary bit-rate transmission half-channel in parallel with a primary bit-rate transmission half-channel, prior to a complete substitution of the secondary bit-rate transmission half-channel for the primary bit-rate transmission half-channel.

In other words, the first switching step 132 consists in making:
- a first Y connection, on a secondary bit-rate half-channel corresponding to the direction of reception from the distant module, within the central module;
- a second Y connection, on a secondary bit-rate half-channel corresponding to the direction of sending by the distant module, within the distant module;
- a change of half-channel, corresponding to the direction of reception by the distant module, within the distant module, in passing from the half-channel corresponding to the direction of primary bit-rate reception to the half-channel corresponding to the direction of secondary bit-rate reception.

As for the second switching step 133, it consists in making a change of half-channel, corresponding to the direction of sendings by the distant module, within the central module, in passing from the primary bit-rate sending half-channel (with respect to the distant module) to the secondary bit-rate sending half-channel (with respect to the distant module).

The procedure 10 furthermore comprises a first step (not shown) for the releasing of the half-channels, corresponding to the primary bit-rate reception and sending directions, in the central module. This first releasing step makes it possible in particular to reuse the implemented means for another call, if any, that is to be undertaken with a distant module which may be different from the one that has just participated in the routing of the last call (which has been the object of a change in reception and sending half-channels).

Similarly, the procedure 10 furthermore comprises a second step (not shown) for the releasing of the half-channels, corresponding to the direction of primary bit-rate reception and sending, within the distant module. This second releasing step makes it possible in particular to reuse the implemented means for another call, if any, that is to be undertaken with a central module.

Following a step 15 for analyzing the success of the switching 13, the operation passes to an incrementation step 16.
- a first counter recording the number of switching(s) on the transmission channel at the secondary bit rate for a subscriber of the telephone transmission network; and/or
- a second counter recording the total number of switching(s) for all the subscribers of the telephone transmission network.

If not, namely if the switching phase 3 has not been performed, the procedure 10 furthermore comprises a step 17 to increment a counter of the failures of this procedure 10 in at least certain situation(s). As situation(s), they may be especially:
- the occupation of all the transmission channels according to a secondary bit rate; and/or
- the reception by the central module of a message reporting that the first switching step has not been done by the distant module.

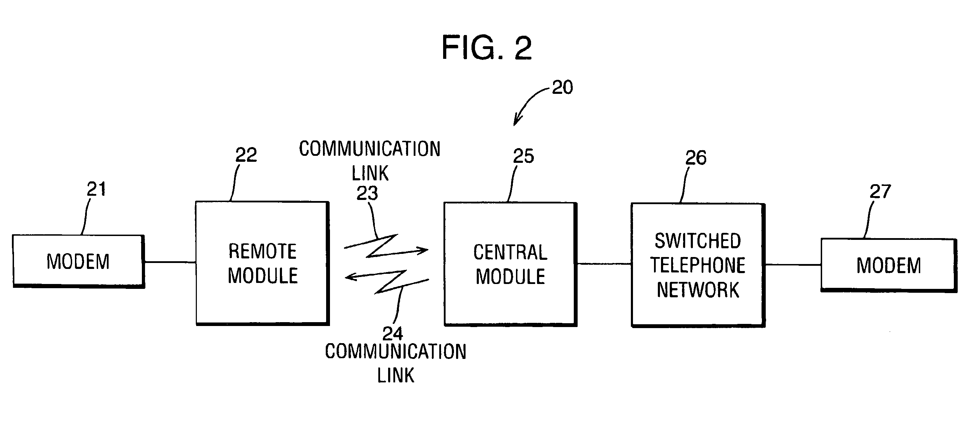

As can be seen in the simplified drawing of figure 2, a telephone transmission network 20 comprises the following means:
- a modem 21 connected to
- a module 22, called a remote module, communicating through a link that works in both directions 23, 24 of communication with
- a module 25 called a central module connected to
- a switched telephone network 26 connected to
- a modem 27.

The modems 21, 27 work according to the recommendation V25.

The central module 25 is constituted especially by a central communications station that manages the shifting of the communications of the telephone transmission network that require it.

As for the remote module 22, it is constituted, for example, by a terminal station that is implemented to receive and/or send (speech and signalling) data elements towards the central module 25.

The link between the central module 25 and the remote module 22 is an RF link with connection of telephone subscribers by radio concentration corresponding to a point-multipoint system. This radio link is located, for example, in the 2.3-2.5 Ghz frequency band.

In the example described, a multiple bit-rate channel has, for the useful part of the information transmitted, a total bit rate of 2 Mbits/s possibly that may comprise 32 channels at a 64 kbit/s rate capable of taking 30 calls or 32 channels at a 32 kbit/s bit rate capable of taking 60 calls. With the aim of automatically reallocating the passband, which may be the maximum, for the transmission of telephone communications data (especially when a signal indicating a secondary bit-rate requirement has been detected), it is possible to implement the bit-rate switching phase 13 (described with reference to figure 1) in order to transmit two calls at a primary bit rate, corresponding for example to 32 Kbits/s of speech each, on a single transmission channel working at a secondary bit rate of 64 Kbits/s. A data compression of this kind therefore enables the passage of 60 calls at a primary bit rate of 32 Kbits/s of data elements.

These speech data elements are then transmitted (i.e. at a secondary bit rate) by a pulse coded modulation (PCM) technique whereas, previously (i.e. in data transmission at a primary bit rate), these same data elements could be transmitted by a different encoding technique such as an Adaptative Differential Pulse Coded Modulation (ADCPM).

It must be noted that the bit-rate switching phase 13 may be implemented by a call initiated by a subscriber equipped with the modem 21 to a subscriber equipped with the modem 27 as well as by a call initiated by the subscriber equipped with the modem 27 to the subscriber equipped with the modem 21. In other words, the bit-rate switching phase 13 can occur on both an outgoing call and an incoming call with respect to a subscriber of the telephone transmission network 20.

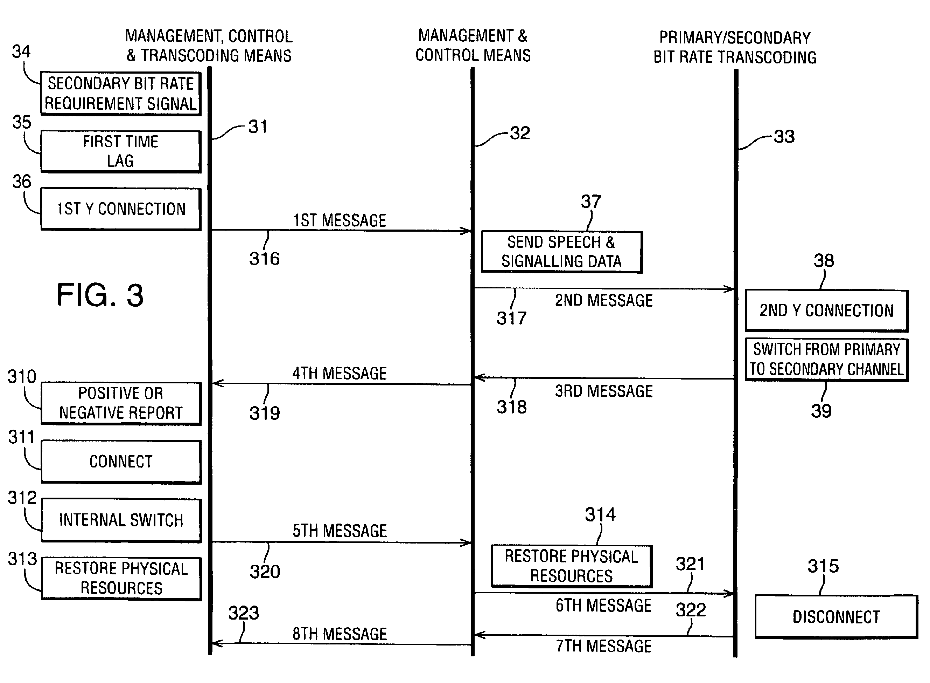

Referring to the simplified flow chart of figure 3, a description shall now be given of a particular mode of operation of a bit-rate switching procedure 30 according to the invention.

A description is given here below especially of the first and second steps for the switching of the transmission half-paths coming into play in the bit-rate switching procedure 30. The first and second switching steps imply especially elementary switching operations between modules for the connection and routing of the communications planned in the terminal and central stations 22, 25 described with reference to figure 2.

The bit-rate switching procedure 30 implements:
- means 31 of management, control of all elementary operations and primary/secondary bit-rate transcoding (hereinafter known as management, control and transcoding means 31) for the central station 25;
- means 32 for the management and control of the elementary operations (hereinafter known as management and control means 32) for the terminal station 22;
- means 33 of primary/secondary bit-rate transcoding for the secondary bit rate of the terminal station 22;

In general, these different means 31 to 33 are the main means coming into play in the sequence of the elementary operations during which they exchange especially a certain number of messages 316 to 323. The messages referenced 316,319, 320, 323 are transmitted through a secured channel for the exchange of messages between the means 31, 32 for the management and control of the elementary operations of the central station and the terminal station respectively. The messages internal to the terminal station referenced 317, 318, 321, 322 are transmitted through elementary communications means between the management and control means 32 and the primary/secondary bit-rate transcoding means 33 of the terminal station 22.

First of all, the management, control and transcoding means 31 for the central station 25 detect (34) a signal indicating a secondary bit-rate requirement for example constituted by a continuous 2100 Hz tone, emitted by the modem 21 of the terminal station 22.

Once the 2100 Hz tone has been detected, the management, control and transcoding means 31 of the central station activate (35) a first time lag of about 800 ms, so as to enable compliance with constraint(s) with, as the case may be, an additional safety margin. A constraint is constituted, for example, by the fact of not disturbing the two changes in phase of the response signal (constituting the signal indicating a secondary bit-rate requirement sent by the called modem) necessitating a predetermined time of about 950 ms for example to deactivate echo processing means.

It will be recalled indeed that:
- the detection of the signal indicating a secondary bit-rate requirement cannot be done, for example, before 200 ms following the appearance of the signal; and that
- the first change in phase can occur, for example, at 475 ms and the second change in phase can occur, for example, at 950 ms after the appearance of the signal.
Then, the management, control and transcoding means 31 carry out an Y connection, on the half-channel corresponding to the direction of reception from the terminal station, for the speech and signalling data elements.

Then, these same management, control and transcoding means 31 of the central station send (316) a first message to the concerned terminal station reporting the « beginning of a switching from a first 32 Kbits/s transmission channel to a second 64 Kbits/s transmission channel ».

After the reception and processing of this first message, the means 32 for the management and control of the terminal station get connected (37) to the half-channel corresponding to the direction of reception and sending for the speech and signalling data elements.

The management and control means 32 of the terminal station inform (317) the transcoding means by a second message reporting « a switch from a first 32 kbits/s transmission channel to a second 64 kbits/s transmission channel ».

After the reception and processing of this second message, the transcoding means 33 of the terminal station make (38) a Y connection on the second secondary bit-rate transmission channel corresponding to the sending direction of the terminal station for the speech and signalling data elements.

Then, the transcoding means 33 make (39) a switch from the first primary bit-rate transmission half-channel to the second secondary bit-rate transmission half-channel corresponding to the direction of reception of the terminal station. An elementary switching operation of this kind prompts an interruption of the call by a duration below a predetermined threshold, for example in the range of about 55 ms at most. These means 33 then send (318) a third message providing a positive report of the start of switching towards the management and control means 32 of the terminal station, when the first switching stage has been successful.

The terminal station management and control means 32 then send (319) a fourth message providing a positive report of a start of switching (from the first primary bit-rate transmission channel to the second secondary bit-rate transmission channel) towards the management, control and transcoding means 31 of the central station.

The first time lag has a duration greater than a predetermined implementation time required for the accomplishment of a step to implement at least one function. As functions, we may refer especially to a step for the deactivation of the network echo processing means, such as echo cancellers and/or suppressors. The fact that the first time lag reaches its term makes it possible to avoid causing disturbance especially in the signal indicating a secondary bit-rate requirement (sent by the called modem) during a predetermined, uninterrupted period of time. An interrupted period of time such as this may range:
- from about 400 to 655 ms in order, for example, to enable the deactivation only of the network echo suppressors; or
- from about 950 to 1255 ms in order to enable, for example, the deactivation of the network echo suppressors and cancellers.

When the first time lag reaches (310) its term and if the fourth message giving report of the start of bit-rate switching is positive (providing information that the terminal station has been able to operate the bit-rate switching from a primary bit-rate transmission channel to a secondary bit-rate transmission channel), the management, control and transcoding means 31 of the central station make (311) a connection on the secondary bit-rate transmission half-channel corresponding to the direction of reception of speech and signalling data from the central station.

Negatively, i.e. when the first time lag reaches its term (310), and if the fourth message reporting on the start of bit-rate switching is negative (providing information that the terminal station has not been able to operate the bit-rate switching from a primary bit-rate transmission channel to a secondary bit-rate transmission channel), the management, control and transcoding means 31 of the central station interrupt the switching procedure. In other words, the switching procedure 30 is aborted solely when the fourth report message is negative. Consequently, the management, control and transcoding means 31 of the central station perform no additional elementary operation.

If the switching procedure (30) has not been abandoned (.e. when the first time lag reaches its term and if the fourth report message is positive) and following the elementary operation 311 described further above, the management, control and transcoding means 31 of the central station perform (312) an internal switching to the speech and signalling data reception half-channel described in detail further below. Then, these same management, control and transcoding means 31 of the central station send (320) a fifth message to the terminal station reporting the « end of the switching from the primary bit-rate transmission channel to the secondary bit-rate transmission channel ».

Finally, the management, control and transcoding means 31 of the central station restore (313) all the physical resources linked to the primary bit-rate transmission channel within the central station.

After reception and processing of the fifth message by the means 32 for the management and control of the elementary operations of the terminal station, these means restore (314) all the physical resources linked to the primary bit-rate transmission channel within the terminal station. To do this, these same means 32 send a sixth message to the transcoding means 33 asking them to disconnect from the primary bit-rate transmission channel.

Following the reception of this sixth message, the transcoding means 33 disconnect from the primary bit-rate transmission channel. At the end of this last-named elementary operation, these transcoding means 33 send (322) a seventh message reporting on the disconnection of the primary bit-rate transmission channel to the management and control means 32 for the terminal station. Finally, these means 32, in turn, send an eighth message report to the central station on the end of the switching of the primary bit-rate transmission channel to the secondary bit-rate transmission channel.

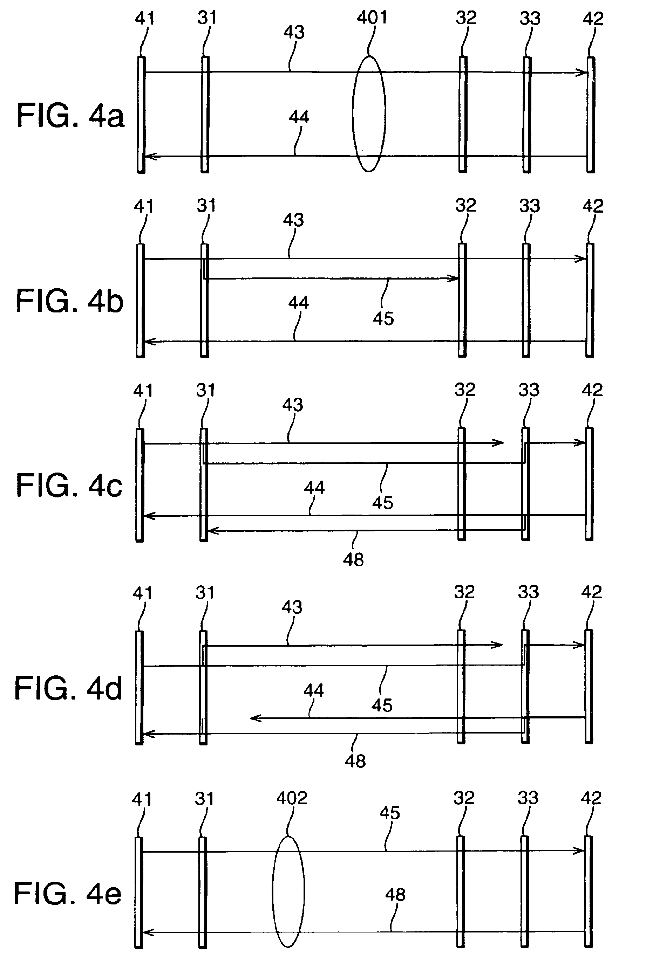

An explanation is now given, with reference to each simplified drawing of figures 4a, 4b, 4c, 4d, 4e of a particular mode of elementary operations of switching between the call connection and routing modules according to the invention.

In general, the connections 43 to 410 implemented during the bit-rate switching procedure 30 furthermore use the means 31 to 33 already described here above, especially:
- means 41 for the connection of subscriber(s) of the central station managing the physical equipment of subscriber(s) within the central station; and
- means 42 to connect a subscriber of the terminal station managing the physical equipment to the subscriber within the terminal station.

Also in general, the arrows shown in figures 4a to 4e are transmission channels on which the speech and signalling data are conveyed.

It will be recalled that in digital data transmission according to the TDMA (Time Division Multiple Access) technique, a transmission channel is constituted by the recurrence of a given time interval in the radio multiplex sent from the central station to the terminal stations.

During a preliminary call setting-up phase (cf. Figure 4a), a first primary bit-rate transmission channel 401 is set up between, on the one hand, the means 41 for connecting a central station and, secondly, the means 42 for connecting a terminal station concerned by the call. This first primary bit-rate transmission channel comprises, firstly, a first half-channel 43 corresponding to the direction of reception by the primary bit-rate terminal station (enabling the transmission of data from the central station to the terminal station) and, secondly, a second half-channel 44 corresponding to the direction of sending by the primary bit-rate terminal station (enabling the transmission of data from the terminal station to the central station).

Following a call set up on the first primary bit-rate transmission channel (cf. figure 4b), the elementary operation referenced 36 (cf. figure 3) consists in making a first Y connection, on a transmission half-channel 45 corresponding to the direction of reception by the secondary bit-rate terminal station, from the management, control and transcoding means 31 to the management and control means 32 of the terminal station.

Then (cf. figure 4c), in the elementary operation referenced 39 (cf. figure 3), the primary/secondary bit-rate transcoding means 33 of the terminal station make:
- firstly, a second Y connection on a secondary bit-rate half-channel 48 corresponding to the direction of sending by the terminal station, and
- secondly, a substitution of the secondary bit-rate half-channel 45 for the primary bit-rate half-channel 43 corresponding to the direction of reception by the terminal station.

Finally (cf. figure 4d), in the elementary operations referenced 311 and 312 (cf. figure 3), the management, control and transcoding means 31, when the time lag activated after the detection of the 2100 Hz tone has reached its term, make:
- firstly, a connection on the secondary bit-rate half-channel 48 corresponding to the direction of sending by the terminal station, and
- secondly, a substitution of the secondary bit-rate half-channel 48 for the primary bit-rate half-channel 44 corresponding to the direction of sending by the terminal station.

Following the restitution of the physical resources related to the first primary bit-rate transmission channel by the central and terminal stations (cf. figure 4e), the data elements are transferred solely through a secondary bit-rate transmission channel 402 (comprising the half-channel 45 corresponding to the direction of reception by the secondary bit-rate terminal station and the half-channel 48 corresponding to the direction of sending by the secondary bit-rate terminal station).

The mode of operation described here above does not seek to limit the scope of the invention to which, therefore, it is possible to make many modifications without departing from its framework. In particular, it will be noted that the bit-rate switching phase 13 (described especially with reference to figure 1) may take forms different from those described.

## Claims

1. Call setting-up method (10) with bit-rate allocation in a multiple bit-rate transmission channel enabling the routing of a call between a central module (25) and a remote module (22), of the type comprising at least one first transmission channel (401) at a primary bit rate and at least one second transmission channel (402) at a secondary bit rate,
in which each of said first transmission channel(s) and said second transmission channel(s) is a two-way channel, namely a channel constituted by a first transmission half-channel (43, 45) in a first direction of communication and a second transmission half-channel (44, 48) in a second direction of communication,
the method being **characterized in that** said call setting-up procedure (10) comprises the following successive phases:
- a phase (11) for setting up a call, by default, on a primary bit-rate transmission channel,
- a phase (12) of listening and searching for a signal indicating a secondary bit-rate requirement
and, assuming a detection of a signal indicating a secondary bit-rate requirement,
- a phase (13) of bit-rate switching from said first primary bit-rate transmission channel (401) to a second secondary bit-rate transmission channel (402), said switching being done at different points in time for said first transmission half-channel (43, 45) and for said second transmission half-channel (44, 48).

2. Call setting-up method (10) according to claim 1, in which the central module (25) and the remote module (22) work together with at least one communications modem (21, 27), the method being further **characterized in that** said signal indicating a secondary bit rate requirement is sent by one of said modems (21, 27).

3. Call setting-up method (10) according to claim 2, of the type comprising a complementary phase (112) for the connection of said modems (21,27), during which:
- the calling modem (27) sends a call tone to the called modem (21), then;
- the called modem (21) sends a response tone to the calling modem (27) during a predetermined and uninterrupted period of time, at the end of which there occurs a phase (14) of negotiation between said modems (21, 27),
the method being further **characterized in that** said switching phase comprises the following steps:
- a step (131) of activation of a first time lag starting from said detection of a signal indicating a secondary bit-rate requirement,
- a first step (132) for the switching of the call, for the half-channel corresponding to the direction of reception by the remote module, from the primary bit-rate transmission channel (43) to the secondary bit-rate transmission channel (45),
- and, at the end of said first time lag, a second step (133) for the switching of the call, for the half-channel corresponding to the direction of sending by the remote module, from the primary bit-rate transmission half-channel (44) to the secondary bit-rate transmission half-channel (48), said first time lag having a duration smaller than said predetermined and uninterrupted time period, at the end of which there is a phase (14) of negotiation between said modems.

4. Call setting-up method (10) according to claim 3, in which there is provided a step of implementation of a function requiring a predetermined implementation time, the method being further
**characterized in that** said first time lag has a duration greater than said predetermined implementation time.

5. Call setting-up method (10) according to claim 1, further **characterized in that** said step for the implementing of a function requiring a predetermined implementation time is a step for the deactivation of network echo suppressors and/or cancellers.

6. Call setting-up method (10) according to any of the claims 2 to 5, in which said first and second steps for the switching of said half-channels imply elementary switching operations between call connection and routing modules (31 to 33, 41, 42), further **characterized in that** said elementary switching operations imply call interruptions with a duration below a predetermined threshold.

7. Call setting-up method (10) according to any of the claims 1 to 6, further **characterized in that** said first and second switching steps (132, 133) include operations for the Y connections of a secondary bit-rate transmission half-channel in parallel with a primary bit-rate transmission half-channel, prior to a full substitution of said secondary bit-rate transmission half-channel for said primary bit-rate transmission half-channel.

8. Call setting-up method (10) according to any of the claims 1 to 7, further **characterized in that** it furthermore comprises a step (17) for the incrementation of a counter of failures of said procedure in at least one of the situations belonging to the group comprising:
- the occupation of all of said transmission channels at a secondary bit rate;
- the reception by said central module (25) of a message reporting that it was not possible for said first switching step to be carried out by said remote module.

9. Call setting-up method (10) according to claim any of the claims 2 to 8, further **characterized in that** said modems (21, 27) work according to the V25 recommendation.

10. Call setting-up method (10) according to any of the claims 1 to 9, further **characterized in that** said signal indicating a secondary bit rate requirement is constituted by a 2100 Hz tone.

11. Call setting-up method (10) according to any of the claims 1 to 10, further **characterized in that** it meets at least one of the following approximate temporal values:
- said predetermined, uninterrupted time period ranges from 400 to 1255 ms;
- said first time lag is in the range of about 800 ms approximately;
- said function requires a predetermined implementation time necessitating a time of about 950 ms;
- said interruptions of calls with a duration below a predetermined threshold are in the range of about 55 ms at most.

12. Call setting-up method (10) according to any of the claims 1 to 11, further **characterized in that** said secondary bit rate is higher than said primary bit rate.

13. Call setting-up method (10) according to any of the claims 1 to 12, further **characterized in that** said secondary bit rate is equal to 64 kbit/s and said primary bit rate is 32 kbit/s.

14. Call setting-up method (10) according to any of the claims 1 to 13, further **characterized in that** the link between said central module (25) and said remote module is an RF link of the type with connection of subscribers by radio concentration.

15. Call setting-up method (10) according to any of the claims 1 to 14, further **characterized in that** said central module (25) is constituted a central communications station managing the retransmission of the calls, and **in that** said remote module is a terminal station.

16. Call setting-up method (10) according to any of the claims 1 to 15, further **characterized in that** said call is transmitted according to PCM encoding techniques.

## Patentansprüche

1. Verbindungsaufbauverfahren (10) mit Bitratenzuteilung in einem Übertragungskanal mit mehreren Bitraten zum Ermöglichen der Leitweglenkung einer Verbindung zwischen einem zentralen Modul (25) und einem fernen Modul (22) des Typs mit mindestens einem ersten Übertragungskanal (401) auf einer primären Bitrate und mindestens einem zweiten Übertragungskanal (402) auf einer sekundären Bitrate, wobei jeder des bzw. der ersten Übertragungskanäle und des bzw. der zweiten Übertragungskanäle ein bidirektionaler Kanal ist, nämlich ein durch einen ersten Übertragungs-Halbkanal (43, 45) in einer ersten Kommunikationsrichtung und einen zweiten Übertragungs-Halbkanal (44, 48) in einer zweiten Kommunikationsrichtung gebildeter Kanal, wobei das Verfahren **dadurch gekennzeichnet ist, daß** die Verbindungsaufbauprozedur (10) die folgenden sukzessiven Phasen umfaßt:
eine Phase (11) zum Aufbauen einer Verbindung als Vorgabe auf einem Übertragungskanal primärer Bitrate,
eine Phase (12) des Horchens und Suchens nach einem Signal, das eine Erfordernis sekundärer Bitrate anzeigt, und
unter der Annahme einer Detektion eines Signals, das eine Erfordernis sekundärer Bitrate anzeigt,
eine Phase (13) des Bitraten-Umschaltens von dem ersten Übertragungskanal primärer Bitrate (401) zu einem zweiten Übertragungskanal sekundärer Bitrate (402), wobei das Umschalten für den ersten Übertragungs-Halbkanal (43, 45) und für den zweiten Übertragungs-Halbkanal (44, 48) zu verschiedenen Zeitpunkten ausgeführt wird.

2. Verbindungsaufbauverfahren (10) nach Anspruch 1, wobei das zentrale Modul (25) und das ferne Modul (22) mit mindestens einem Kommunikationsmodem (21, 27) zusammenarbeiten, wobei das Verfahren ferner **dadurch gekennzeichnet ist, daß** das Signal, das eine Erfordernis sekundärer Bitrate anzeigt, von einem der Modems (21, 27) gesendet wird.

3. Verbindungsaufbauverfahren (10) nach Anspruch 2 des Typs mit einer komplementären Phase (112) für die Verbindung der Modems (21, 27), in der folgendes geschieht:
das rufende Modem (27) sendet einen Rufton zu dem angerufenen Modem (21), woraufhin
das angerufene Modem (21) während eines vorbestimmten und ununterbrochenen Zeitraums, an dessen Ende eine Phase (14) der Aushandlung zwischen den Modems (21, 27) erfolgt, einen Antwortton zu dem rufenden Modem (27) sendet,
wobei das Verfahren ferner **dadurch gekennzeichnet ist, daß** die Umschaltphase die folgenden Schritte umfaßt:
einen Schritt (131) des Aktivierens einer von der Detektion eines Signals, das eine Erfordernis sekundärer Bitrate anzeigt, an beginnenden ersten Zeitverzögerung,
einen ersten Schritt (132) zum Umschalten der Verbindung für den der Richtung des Empfangs durch das ferne Modul entsprechenden Halbkanal von dem ersten Übertragungskanal (43) primärer Bitrate zu dem zweiten Übertragungskanal (45) sekundärer Bitrate,
und am Ende der ersten Zeitverzögerung einen zweiten Schritt (133) zum Umschalten der Verbindung für den der Richtung des Sendens durch das ferne Modul entsprechenden Halbkanal von dem Übertragungs-Halbkanal (44) primärer Bitrate zu dem Übertragungs-Halbkanal (48) sekundärer Bitrate, wobei die erste Zeitverzögerung eine Dauer aufweist, die kleiner als der vorbestimmte und ununterbrochene Zeitraum ist, an dessen Ende eine Phase (14) der Aushandlung zwischen den Modems erfolgt.

4. Verbindungsaufbauverfahren (10) nach Anspruch 3, wobei ein Schritt der Implementierung einer Funktion vorgesehen ist, die eine vorbestimmte Implementierungszeit erfordert, wobei das Verfahren ferner **dadurch gekennzeichnet ist, daß** die erste Zeitverzögerung eine Dauer aufweist, die größer als die vorbestimmte Implementierungszeit ist.

5. Verbindungsaufbauverfahren (10) nach Anspruch 1, ferner **dadurch gekennzeichnet, daß** der Schritt für die Implementierung einer Funktion, die eine vorbestimmte Implementierungszeit erfordert, ein Schritt zur Deaktivierung von Netzechounterdrückern und/oder -löschern ist.

6. Verbindungsaufbauverfahren (10) nach einem der Ansprüche 2 bis 5, wobei der erste und der zweite Schritt für das Umschalten der Halbkanäle elementare Umschaltoperationen zwischen Rufverbindungs- und -leitweglenkmodulen (31 bis 33, 41, 42) implizieren, ferner **dadurch gekennzeichnet, daß** die elementaren Umschaltoperationen Verbindungsunterbrechungen mit einer Dauer von weniger als einer vorbestimmten Schwelle implizieren.

7. Verbindungsaufbauverfahren (10) nach einem der Ansprüche 1 bis 6, ferner **dadurch gekennzeichnet, daß** der erste und der zweite Umschaltsschritt (132, 133) Operationen für die Y-Verbindungen eines Übertragungs-Halbkanals sekundärer Bitrate parallel mit einem Übertragungs-Halbkanals primärer Bitrate vor einem vollen Ersatz des Übertragungs-Halbkanals primärer Bitrate durch den Übertragungs-Halbkanal sekundärer Bitrate umfassen.

8. Verbindungsaufbauverfahren (10) nach einem der Ansprüche 1 bis 7, ferner **dadurch gekennzeichnet, daß** es weiterhin einen Schritt (17) zum Imkrementieren eines Zählers von Fehlschlägen der Prozedur in mindestens einer der Situationen aus der folgenden Gruppe umfaßt:
Belegung aller der Übertragungskanäle auf einer sekundären Bitrate;
Empfang durch das zentrale Modul (25) einer Nachricht, die meldet, daß die Ausführung des ersten Umschaltschritts durch das ferne Modul nicht möglich war.

9. Verbindungsaufbauverfahren (10) nach einem der Ansprüche 2 bis 8, ferner **dadurch gekennzeichnet, daß** die Modems (21, 27) gemäß der Empfehlung V25 arbeiten.

10. Verbindungsaufbauverfahren (10) nach einem der Ansprüche 1 bis 9, ferner **dadurch gekennzeichnet, daß** das Signal, das eine Erfordernis sekundärer Bitrate anzeigt, durch einen 2100-Hz-Ton gebildet wird.

11. Verbindungsaufbauverfahren (10) nach einem der Ansprüche 1 bis 10, ferner **dadurch gekennzeichnet, daß** es mindestens einem der folgenden ungefähren zeitlichen Werte genügt:
der vorbestimmte ununterbrochene Zeitraum liegt in dem Bereich von 400 bis 1255 ms;
die erste Zeitverzögerung liegt in dem Bereich von ungefähr 800 ms;
die Funktion erfordert eine vorbestimmte Implementierungszeit, wodurch eine Zeit von etwa 950 ms notwendig wird;
die Unterbrechungen von Verbindungen mit einer Dauer von weniger als einer vorbestimmten Schwelle liegen in dem Bereich von höchstens etwa 55 ms.

12. Verbindungsaufbauverfahren (10) nach einem der Ansprüche 1 bis 11, ferner **dadurch gekennzeichnet, daß** die sekundäre Bitrate höher als die primäre Bitrate ist.

13. Verbindungsaufbauverfahren (10) nach einem der Ansprüche 1 bis 12, ferner **dadurch gekennzeichnet, daß** die sekundäre Bitrate gleich 64 kbit/s und die primäre Bitrate gleich 32 kbit/s ist.

14. Verbindungsaufbauverfahren (10) nach einem der Ansprüche 1 bis 13, ferner **dadurch gekennzeichnet, daß** die Strecke zwischen dem zentralen Modul (25) und dem fernen Modul eine HF-Strecke des Typs mit Verbindung von Teilnehmern durch Funkzusammenschluß ist.

15. Verbindungsaufbauverfahren (10) nach einem der Ansprüche 1 bis 14, ferner **dadurch gekennzeichnet, daß** das zentrale Modul (25) durch eine die Weiterübertragung der Verbindungen verwaltende zentrale Kommunikationsstation gebildet wird und daß das ferne Modul eine Abschlußstation ist.

16. Verbindungsaufbauverfahren (10) nach einem der Ansprüche 1 bis 15, ferner **dadurch gekennzeichnet, daß** die Verbindung gemäß PCM-Codierungstechniken übertragen wird.

## Revendications

1. Procédé d'établissement d'appel (10) à attribution de débit binaire dans un canal de transmission à débits binaires multiples permettant le routage d'un appel entre un module central (25) et un module distant (22), du type comprenant au moins un premier canal de transmission (401) à un débit binaire principal et au moins un deuxième canal de transmission (402) à un débit binaire secondaire,
dans lequel chacun dudit ou desdits premiers canaux de transmission et dudit ou desdits deuxièmes canaux de transmission est un canal bidirectionnel, à savoir un canal constitué par un premier demi-canal de transmission (43, 45) dans un premier sens de communication et un second demi-canal de transmission (44, 48) dans un second sens de communication,
le procédé étant **caractérisé en ce que** ladite procédure d'établissement d'appel (10) comprend les phases successives suivantes :
- une phase (11) pour établir un appel, par défaut, sur un canal de transmission à débit binaire principal,
- une phase (12) pour écouter et rechercher un signal indiquant un besoin de débit binaire secondaire et, en supposant une détection d'un signal indiquant un besoin de débit binaire secondaire,
- une phase (13) de commutation de débit binaire dudit premier canal de transmission de débit binaire principal (401) sur un deuxième canal de transmission à débit binaire secondaire (402), ladite commutation étant effectuée à des points différents dans le temps pour ledit premier demi-canal de transmission (43, 45) et pour ledit second demi-canal de transmission (44, 48).

2. Procédé d'établissement d'appel (10) selon la revendication 1, dans lequel le module central (25) et le module distant (22) fonctionnent ensemble avec un au moins un modem de communications (21, 27),
le procédé étant en outre **caractérisé en ce que** ledit signal indiquant un besoin de débit binaire secondaire est envoyé par l'un desdits modems (21, 27).

3. Procédé d'établissement d'appel (10) selon la revendication 2, du type comprenant une phase complémentaire (112) pour la connexion desdits modems (21, 27), durant laquelle :
- le modem appelant (27) envoie une tonalité d'appel au modem appelé (21), puis ;
- le modem appelé (21) envoie une tonalité de réponse au modem appelant (27) durant une période de temps prédéterminée et ininterrompue, à la fin de laquelle se déroule une phase (14) de négociation entre lesdits modems (21, 27),
le procédé étant en outre **caractérisé en ce que** ladite phase de commutation comprend les étapes suivantes :
- une étape (131) d'activation d'un premier retard de temps commençant à compter de la détection d'un signal indiquant un besoin de débit binaire secondaire,
- une première étape (132) de commutation de l'appel, pour le demi-canal correspondant au sens de réception par le module distant, du canal de transmission de débit binaire principal (43) sur ledit canal de transmission de débit binaire secondaire (45),
- et, à la fin dudit premier retard de temps, une seconde étape (133) de commutation de l'appel, pour le demi-canal correspondant au sens d'envoi par le module distant, du demi-canal de transmission de débit binaire principal (44) sur ledit demi-canal de transmission de débit binaire secondaire (48), ledit premier retard de temps ayant une durée inférieure à ladite période de temps prédéterminée et ininterrompue, à la fin de laquelle se déroule une phase (14) de négociation entre lesdits modems.

4. Procédé d'établissement d'appel (10) selon la revendication 3, dans lequel est prévue une étape de mise en oeuvre d'une fonction exigeant un temps de mise en oeuvre prédéterminé, le procédé étant en outre **caractérisé en ce que** ledit premier retard de temps a une durée supérieure audit temps de mise en oeuvre prédéterminé.

5. Procédé d'établissement d'appel (10) selon la revendication 1, **caractérisé en outre en ce que** ladite étape de mise en oeuvre d'une fonction exigeant un temps de mise en oeuvre prédéterminé est une étape de désactivation de suppresseurs d'écho du réseau.

6. Procédé d'établissement d'appel (10) selon l'une quelconque des revendications 2 à 5, dans lequel lesdites première et seconde étapes de commutation desdits demi-canaux impliquent des opérations de commutation élémentaires entre des modules de connexion et de routage d'appel (31 à 33, 41, 42), **caractérisé en outre en ce que** lesdites opérations de commutation élémentaires impliquent des interruptions d'appel d'une durée inférieure à un seuil prédéterminé.

7. Procédé d'établissement d'appel (10) selon l'une quelconque des revendications 1 à 6, **caractérisé en outre en ce que** lesdites première et seconde étapes de commutation (132, 133) comportent des opérations pour les connexions étoile d'un demi-canal de transmission de débit binaire secondaire en parallèle à un demi-canal de transmission de débit binaire principal, avant une substitution totale dudit demi-canal de transmission de débit binaire secondaire audit demi-canal de transmission de débit binaire principal.

8. Procédé d'établissement d'appel (10) selon l'une quelconque des revendications 1 à 7, **caractérisé en outre en ce qu'**il comprend de plus une étape (17) d'incrémentation d'un compteur d'échecs de ladite procédure dans au moins l'une des situations figurant dans le groupe suivant:
- l'occupation de tous lesdits canaux de transmission à un débit binaire secondaire ;
- la réception par ledit module central (25) d'un message signalant que ledit module distant n'a pas été en mesure d'exécuter ladite première étape de commutation.

9. Procédé d'établissement d'appel (10) selon l'une quelconque des revendications 2 à 8, **caractérisé en outre en ce que** lesdits modems (21, 27) fonctionnent conformément à la recommandation V25.

10. Procédé d'établissement d'appel (10) selon l'une quelconque des revendications 1 à 9, **caractérisé en outre en ce que** ledit signal indiquant un besoin de débit binaire secondaire est constitué par une tonalité de 2100 Hz.

11. Procédé d'établissement d'appel (10) selon l'une quelconque des revendications 1 à 10, **caractérisé en outre en ce qu'**il satisfait au moins l'une des valeurs temporelles approximatives suivantes:
- ladite période de temps prédéterminée ininterrompue s'étend de 400 à 1255 ms ;
- ledit premier retard de temps est environ de l'ordre de 800 ms approximativement ;
- ladite fonction exige un temps de mise en oeuvre prédéterminé nécessitant une durée d'environ 950 ms ;
- lesdites interruptions des appels d'une durée inférieure à un seuil prédéterminé sont de l'ordre de 55 ms environ au plus.

12. Procédé d'établissement d'appel (10) selon l'une quelconque des revendications 1 à 11, **caractérisé en outre en ce que** ledit débit binaire secondaire est supérieur audit débit binaire principal.

13. Procédé d'établissement d'appel (10) selon l'une quelconque des revendications 1 à 12, **caractérisé en outre en ce que** ledit débit binaire secondaire est égal à 64 kbits/s et ledit débit binaire principal est de 32 kbits/s.

14. Procédé d'établissement d'appel (10) selon l'une quelconque des revendications 1 à 13, **caractérisé en outre en ce que** la liaison entre ledit module central (25) et ledit module distant est une liaison RF du type à connexion des abonnés par concentration radio.

15. Procédé d'établissement d'appel (10) selon l'une quelconque des revendications 1 à 14, **caractérisé en outre en ce que** ledit module central (25) est constitué par une station de communications centrale qui gère la retransmission des appels, et **en ce que** ledit module distant est une station terminale.

16. Procédé d'établissement d'appel (10) selon l'une quelconque des revendications 1 à 15, **caractérisé en outre en ce que** ledit appel est transmis conformément à des techniques de codage MIC.
